# EUROPÄISCHE PATENTSCHRIFT

(11) **EP 0 596 831 B1**
(45) Veröffentlichungstag und Bekanntmachung des Hinweises auf die Patenterteilung: **04.12.1996**
(21) Anmeldenummer: 93810740.6
(22) Anmeldetag: 21.10.1993
(51) Int. Cl.: B24D 5/16, B24D 7/16, B24B 45/00, B24B 55/02, B27B 5/32, B27B 5/34, B23D 59/02

(54) **Scheibenförmiges Werkzeug für Winkelschleifer**
Disc-like tool for angle grinder
Outil en forme de disque pour meuleuse d'angle

(30) Priorität: 02.11.1992 DE 4236964
(43) Veröffentlichungstag der Anmeldung: 11.05.1994
(73) Patentinhaber: HILTI Aktiengesellschaft, 9494 Schaan (LI)
(72) Erfinder: Udert, Karl Ernst, FL-9495 Triesen (LI); Winkler, Walter, CH-9473 Gams (CH)
(74) Vertreter: Wildi, Roland

(56) Entgegenhaltungen:
- DE-A- 3 520 417
- FR-E- 74 270
- US-A- 3 528 203
- US-A- 4 237 659

## Beschreibung

Die Erfindung betrifft ein scheibenförmiges Werkzeug, für handgeführte Antriebsgeräte, mit einem ringscheibenförmigen Trägerkörper, der am äusseren Umfang sowie wenigstens teilweise in dem an den Umfang anschliessenden Bereich der Seitenflächen mit Schleifkom belegt ist und eine zentrale Durchgangsbohrung aufweist.

Scheibenförmige, mit Schleifkorn belegte Werkzeuge dienen dem Herstellen von Nuten oder Kerben und dem Bearbeiten von Oberflächen sowie dem Trennen oder Fräsen von Teilen, die aus hartem Material, beispielsweise Beton, Stein oder dergleichen bestehen.

Aus der DE-OS 35 13 687 ist eine Diamanttrennscheibe bekannt, die einen ringscheibenförmigen Trägerkörper aufweist, der eine Durchgangsbohrung besitzt und am äusseren Umfang sowie an den Seitenflächen mit Diamantkorn belegt ist. Die Durchgangsbohrung verläuft rechtwinklig zu den Seitenflächen des Trägerkörpers.

Das Befestigen einer derartigen Diamanttrennscheibe an einem handgeführten Antriebsgerät erfolgt mit Hilfe eines an der Antriebsspindel des Antriebsgerätes angeordneten Flansches und einem Befestigungselement unter Zwischenlage der Diamanttrennscheibe. Obwohl die bekannte Diamanttrennscheibe an den Seitenflächen teilweise mit Diamantkorn belegt ist, kann keine Oberflächenbearbeitung des zu bearbeitenden Untergrundes durchgeführt werden. Zumindest ein Teil des Befestigungselementes überragt die vom Antriebsgerät abgewandte Seitenfläche der Diamanttrennscheibe und kann somit an dem zu bearbeitenden Untergrund aufliegen bzw. mit diesem in Berührung kommen.

Ferner ist aus der DE-OS 32 39 986 ein Antriebsgerät mit federndem Auflageschlitten zum Fräsen von Schattenfugen bekannt. Das in dieser Druckschrift dargestellte Kreissägeblatt ist von topfförmiger Gestalt, so dass eine, dem Befestigen des Kreissägeblattes an dem Antriebsgerät dienende Befestigungsmutter oberflächenbündig mit einer Seitenfläche des Kreissägeblattes anordbar ist.

Wären bei einem solchen Kreissägeblatt die Seitenflächen mit Schleifkom belegt, könnte eine Oberflächenbearbeitung erfolgen. Allerdings wäre die aus Verschleissgründen erwünschte beidseitige Verwendbarkeit aufgrund der topfförmigen Ausbildung nicht möglich, so dass diesbezüglich erhebliche Nachteile entstehen würden.

Gegenstand der FR-E-74 270 ist ein scheibenförmiges Werkzeug für handgeführte Antriebsgeräte, mit einem ringscheibenförmigen Trägerkörper, der am äusseren Umfang sowie wenigstens teilweise in dem an den Umfang anschliessenden Bereich der Seitenflächen mit Schleifkom belegt ist und eine zentrale Durchgangsbohrung aufweist, wobei sich die Durchgangsbohrung beidseitig von den Seitenflächen zu der senkrecht zur Achse der Durchgangsbohrung stehenden Mittelebene des Trägerkörpers hin entlang eines geringfügigen Anteils der axialen Erstreckung der Durchgangsbohrung verjüngt. Damit ein mit dem scheibenförmigen Werkzeug zusammenwirkendes Befestigungslement die Seitenfläche nicht überragt, muss das scheibenförmige Werkzeug relativ dick ausgebildet sein.

Aus der US-A 4 237 659 sind zwei scheibenförmige Werkzeuge bekannt. Jedes dieser Werkzeuge steht mit einem, eine Durchgangsbohrung aufweisenden Trägerkörper in Verbindung. Die Durchgangsbohrung verjüngt sich zumindest auf einer Seitenfläche zu der senkrecht zu Achse der Durchgangsbohrung stehenden Mittelebene des Tragerkörpers hin. Diese Verjüngung dient der Aufnahme eines, einen kegelförmigen Spannbereich aufweisenden Befestigungselementes, das Teil einer Schnellspannvorrichtung ist. Eines der beiden Werkzeuge weist einen tellerförmigen Trägerkörper auf, der an einer Seitenfläche mit Schleifkom belegt ist. Der Trägerkörper des weiteren Werkzeugs weist an seinem Umfang eine Vielzahl elastischer Trägerstreifen auf, die mit Schleifkom belegt sind.

Der Erfindung liegt die Aufgabe zugrunde, ein scheibenförmiges Werkzeug derart auszubilden, dass die Oberflächenbearbeitung mit dem umfangsseitigen Bereich und mit beiden Seitenflächen ermöglicht wird.

Erfindungsgemäss wird dies in einem scheibenförmigen Werkzeug nach dem Oberbegriff des Anspruchs 1 dadurch erreicht, dass sich die Durchgangsbohrung beidseitig von den Seitenflächen bis zu der senkrecht zur Achse der Durchgangsbohrung stehenden Mittelebene des Trägerkörpers symmetrisch verjüngt.

Durch die Verjüngung entstehen Angriffsflächen im Bereich der Durchgangsbohrung für ein der Befestigung des scheibenförmigen Werkzeuges dienendes Befestigungselement, welches wenigstens oberflächenbündig mit einer Seitenfläche des Trägerkörpers anordbar ist, so dass auch mit jener Seitenfläche eine Oberflächenbearbeitung des zu bearbeitenden Untergrundes durchgeführt werden kann, an deren Seite das Befestigungselement an dem sich verjüngenden Bereich der Durchgangsbohrung angreift.

Ein derartiges Befestigungselement kann zB eine Befestigungsmutter, -schraube oder Spreizhülse sein, deren Klemmbereich bzw. Klemmfläcen auf die Angriffsflächen des scheibenförmigen Werkzeuges abgestimmt sind. Beim Festlegen des Befestigungselementes erfolgt zusätzlich ein radiales Zentrieren des scheibenförmigen Werkzeuges gegenüber einer Aufnahmevorrichtung eines Antriebsgerätes.

Durch die symmetrische Ausbildung der Verjüngung kann das Befestigungselement an beiden Angriffsflächen gleich angreifen.

Vorzugsweise verjüngt sich die Durchgangsbohrung kegelförmig. Kegelförmige Flächen sind mit entsprechenden Werkzeugen einfach und kostengünstig herstellbar.

Um ein im Bereich der Durchgangsbohrung des scheibenförmigen Werkzeuges einwirkendes Drehmoment besser aufnehmen zu könnnen, ist die Durchgangsbohrung zweckmässigerweise im sich verjüngenden Bereich mit einer profilierten Oberfläche versehen. Diese Oberfläche ist insbesondere gebildet von sich im wesentlichen strahlenförmig zu einem Zentrum gerichteten, im wesentlichen symmetrisch angeordneten Mitnahmeflächen, die beispielsweise Flanken einer verzahnten Oberfläche sein können.

Durch eine geeignete Aufnahmevorrichtung können auch mehrere, erfindungsgemäss ausgebildete scheibenförmige Werkzeuge nebeneinander angeordnet werden, wobei zwischen den scheibenförmigen Werkzeugen jeweils entprechende Distanzelemente, beispielsweise Zwischenringe, angeordnet sind, die ebenfalls auf die Angriffsflächen des scheibenförmigen Werkzeuges abgestimmt sind. Auf diese Weise können Antriebsgeräte nicht nur zum Schleifen oder Trennen sondern auch zum Fräsen verwendet werden, wenn es zB darum geht, Nuten in ein Mauerwerk zu fräsen.

Vorteilhafterweise findet ein scheibenförmiges Werkzeug in Verindung mit einem handgeführten Antriebsgerät derart Verwendung, dass ein dem Antriebsgerät zugeordnetes Befestigungselement mit einem kegelförmigen Spannbereich in einer eine Seitenfläche des scheibenförmigen Werkzeuges nicht überragenden Weise mit der Durchgangsbohrung zusammenwirkt.

Ein gemäss der Erfindung ausgebildetes scheibenförmiges Werkzeug kann bei verschiedenen, handgeführten Antriebsgeräten verwendet werden. Ein derartiges Antriebsgerät kann ein Winkelschleifer sein, der im speziellen für Schleif- und Trennarbeiten sowie diverse Fräsarbeiten in Mauerwerk, Beton, Stahlbeton usw. Verwendung findet. Es sind auch Antriebsgeräte denkbar, die eine schwingende und schwingend, rotierende Schleifbewegung auf das scheibenförmige Werkzeug abgeben.

Bei Trenn- und Schleifarbeiten ist in der Regel nur ein scheibenförmiges Werkzeug an den Winkelschleifer angeordnet. Bei der Durchführung von Fräsarbeiten können je nach Breite der auszuführenden Öffnung im zu bearbeitenden Untergrund mehrere Scheiben nebeneinander angeordnet sein. Abhängig von der Materialbeschaffenheit des Untergrundes können diese scheibenförmigen Werkzeuge näher zusammen oder weiter auseinander zu einem Scheibensatz verbunden sein. Zwischen den einzelnen scheibenförmigen Werkzeugen sind entsprechende Distanzelemente angeordnet.

Mittels eines Befestigungselementes, das mit der Antriebswelle des Winkelschleifers zusammenwirkt, können die einzelnen Scheiben zusammengezogen und somit fest an dem Winkelschleifer angeordnet werden. Das Befestigungselement wirkt dabei mit der vom Winkelschleifer abliegenden Seitenfläche des am weitesten vom Winkelschleifer abliegenden scheibenförmigen Werkzeuges zusammen.

Damit das vom Antriebsgerät erzeugte Drehmoment über das Befestigungselement besser auf den ringscheibenförmigen Trägerkörper übertragen werden kann, kann der kegelförmige Spannbereich mit einer profilierten Oberfläche versehen sein. Die Profilierung kann zahnartig ausgebildet sein, wobei die Flanken der Zähne Mitnahmeflächen bilden, die im wesentlichen strahlenförmig zu einem Zentrum gerichtet sind.

Die Erfindung wird anhand mehrerer Ausführungsbeispiele näher erläutert. Es zeigen:
- Fig. 1 einen Winkelschleifer mit einem erfindungsgemässen scheibenförmigen Werkzeug;
- Fig. 2 eine vergrösserte Darstellung einer Aufnahmevorrichtung mit dem scheibenförmigen Werkzeug gemäss Fig. 1;
- Fig. 3 eine vergrösserte Darstellung einer weiteren Aufnahmevorrichtung mit zwei scheibenförmigen Werkzeugen;
- Fig. 4 eine vergrösserte Darstellung eines weiteren scheibenförmigen Werkzeuges.

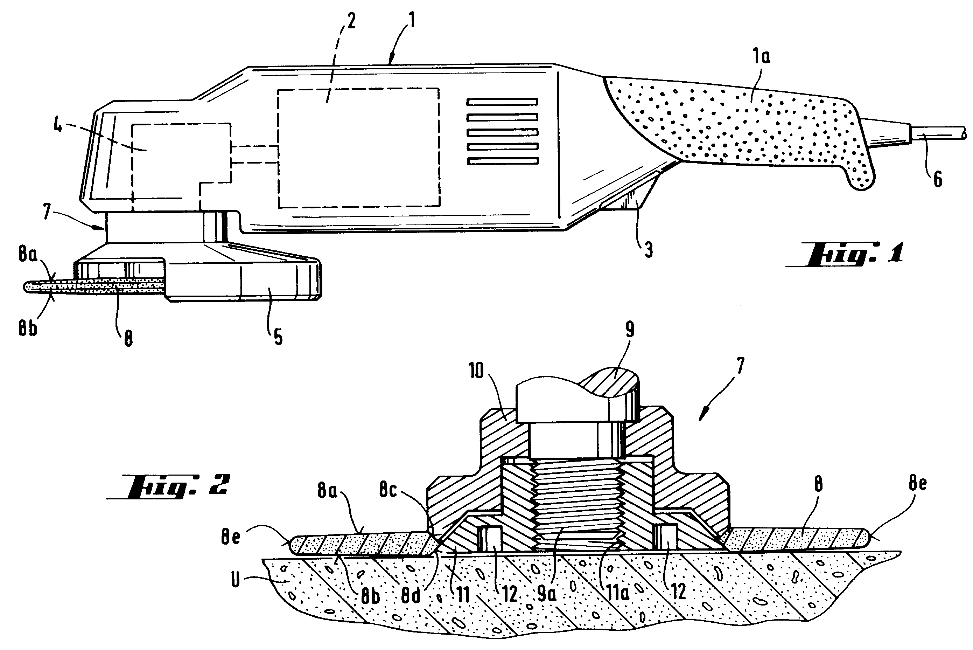

Das in Fig. 1 dargestellte, handgeführte Antriebsgerät ist ein Winkelschleifer. Er weist ein Gehäuse 1, einen Handgriff 1a, einen im Gehäuse 1 angeordneten Antriebsmotor 2, einen Betätigungsschalter 3, ein Winkelgetriebe 4, eine Schutzhaube 5, ein elektrisches Verbindungskabel 6, das den Winkelschleifer mit einer extemen Stromquelle verbindet und eine Aufnahmevorrichtung 7 auf, die der Aufnahme eines scheibenförmigen Werkzeuges 8 dient.

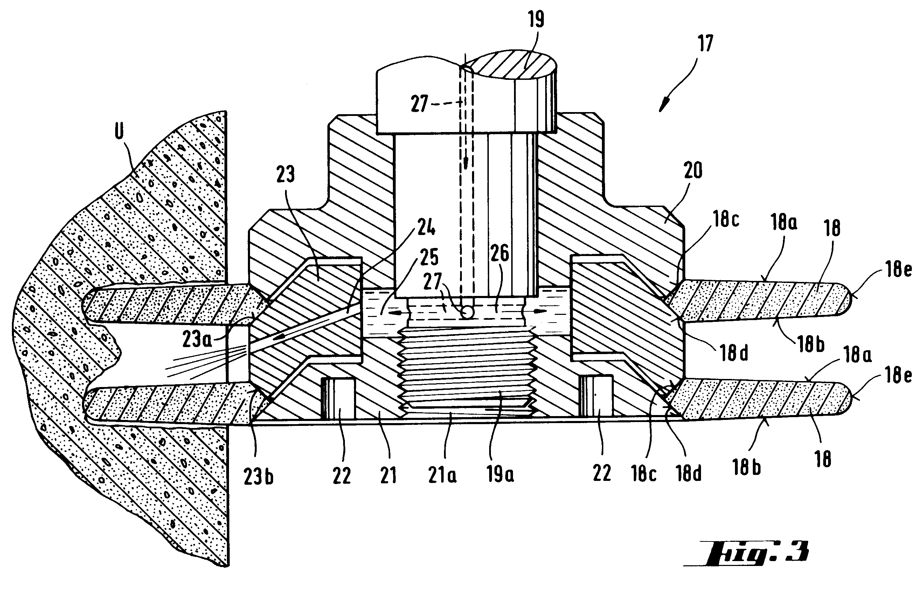

Die Fig. 2 zeigt eine vergrösserte Darstellung der Aufnahmevorrichtung 7 in Verbindung mit dem scheibenförmigen Werkzeug 8 bei der Oberflächenbearbeitung eines Untergrundes U. Die Aufnahmevorrichtung 7 sitzt auf einer Antriebsspindel 9 des Winkelgetriebes 4, das vom Antriebsmotor 2 angetrieben wird und wenigstens teilweise aus dem vorderen Bereich des Gehäuses 1 axial vorsteht. Die Aufnahmevorrichtung 7 besteht aus einem flanschartigen Element 10 und einem Befestigungselement 11. Dieses Befestigungselement 11 ist mit einem Innengewinde 11a versehen, das mit einem Aussengewinde 9a der Antriebsspindel 9 zusammenwirkt. Das Befestigungselement 11 weist zwei einander diametral gegenüberliegende Sacklochbohrungen 12 auf, die der Aufnahme von Zapfen eines nicht dargestellten Zapfenschlüssels dienen. Der Zapfenschlüssel dient dem Festziehen des Befestigungselementes 11.

Das scheibenförmige Werkzeug 8 besteht aus einem ringscheibenförmigen Trägerkörper, der an seinem Umfang 8e sowie an den Seitenflächen 8a, 8b mit Schleifkom belegt ist und eine zentrale Durchgangsbohrung aufweist. Im Bereich der zentralen Durchgangsbohrung ist der Trägerkörper derartig ausgebildet, dass er von beiden Seitenflächen 8a, 8b her an der Aufnahmevorrichtung 7 festlegbar ist. Zu diesem Zweck verjüngt sich der Trägerkörper im Bereich der zentralen Durchgangsbohrung in Richtung Zentrum. Die zentrale Durchgangsbohrung weist kegelförmige Flächen 8c, 8d auf, die symmetrisch zueinander ausgeildet sind. Der Schnittpunkt dieser Flächen 8c, 8d liegt in der mittleren Radialebene des Trägerkörpers. Das scheibenförmige Werkzeug 8 eignet sich somit zum Trennen, Schleifen und Fräsen von harten Materialien. Die Bearbeitung derartiger Materialien kann nass oder trocken erfolgen.

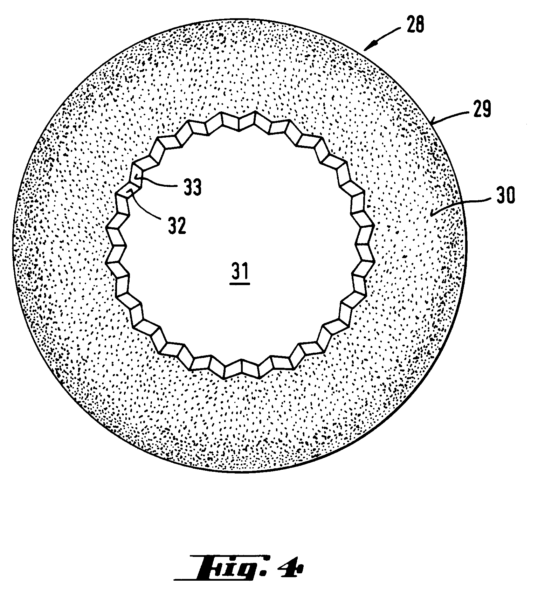

Die Fig. 3 zeigt eine vergrösserte Darstellung einer Aufahmevorrichtung 17 in Verbindung mit zwei, nebeneinander angeordneten scheibenförmigen Werkzeugen 18 bei der Erstellung einer schlitzartigen Öffnung in einem Untergrund U, der im vorliegenden Beispiel Beton ist. Die dargestellten scheibenförmigen Werkzeuge 18 bestehen aus ringscheibenförmigen Trägerkörpern, die an ihrem Umfang 18e sowie an beiden Seitenflächen 18a, 18b mit Diamantkorn belegt sind. Die Aufnahmevorrichtung 17 steht mit einer Antriebspindel 19 eines Winkelschleifers in Verbindung. Die Aufnahmevorrichtung 17 besteht aus einem flanschartigen Element 20 und einem Befestigungselement 21. Dieses Befestigungselement 21 ist mit einem Innengewinde 21a versehen, das mit einem Aussengewinde 19a der Antriebspindel 19 zusammenwirkt und einander diametral gegenüberliegende Sacklochbohrungen 22 aufeist, die der Aufnahme von Zapfen eines nicht dargestellten Zapfenschlüssels dienen.

Zwischen den scheibenförmigen Werkzeugen 18 ist ein entsprechendes Distanzelement 23, beispielsweise ein Zwischenring, angeordnet. Die ringscheibenförmigen Trägerkörper der scheibenförmigen Werkzeuge 18 verjüngen sich im Bereich der Durchgangsbohrungen in Richtung Zentrum. Die Durchgangsbohrungen weisen kegelförmige Flächen 18c, 18d auf, die symmetrisch zueinander ausgebildet sind. Die Distanzhülse 23 weist an beiden stirnseitigen Enden Anschlagflächen 23a, 23b bzw. Klemmflächen auf, die ebenfalls kegelförmig ausgebildet sind, so dass sie mit der kegelförmig ausgebildeten Durchgangsbohrungen der Trägerkörper zusammenwirken können.

Bei der Erstellung der schlitzartigen Öffnung bleibt der Untergrund U zwischen den scheibenförmigen Werkzeugen 18 erhalten, der jedoch nach der Erstellung der Öffnung mit einem geeigneten Werkzeug herausgeschlagen werden kann.

Um die bei der Erstellung schlitzartiger Öffnungen in einem Untergrund U entstehende Staubbelastung und den Verschleiss der scheibenförmigen Werkzeuge 18 zu verringern, weist die Aufnahmevorrichtung 17 eine Wasserzuführeinrichtung auf. Diese Wasserzuführeinrichtung besteht aus einem Zuleitungskanal 27, der im wesentlichen im Zentrum der Antriebsspindel 19 verläuft und sich vor dem Gewinde 19a in eine an der Antriebswelle 19 angeordnete, umlaufend ausgebildete Nut 26 erstreckt. Durch den Zuleitungskanal 27 zugeführtes Medium gelangt durch einen entsprechenden Verbindungskanal 24 im Distanzelement 23 in den Bearbeitungsbereich. Das flanschartige Element 20 und das Befestigungselement 21 wirkenje mit einem umlaufend ausgebildeten Ansatz mit dem Distanzelement 23 zusammen. Zwischen beiden Stirnflächen der zueinanderweisenden Ansätze bildet sich ein umlaufend ausgebildeter Hohlraum 25, der im Mündungsbereich des Zuleitungskanales 27 und dem Verbindungskanal 24 angeordnet ist.

Die Fig. 4 zeigt ein scheibenförmiges Werkzeug 28, bestehend aus einem ringscheibenförmigen Trägerkörper, der an seinem Umfang 29 sowie an den Seitenflächen 30 mit Schleifkorn belegt ist und eine zentrale Durchgangsbohrung 31 aufweist. Im Umfangsbereich der zentralen Durchgangsbohrung 31 verjüngt sich der Trägerkörper von den Seitenflächen 30 her konisch zu einer rechtwinklig zur Durchgangsbohrung 31 verlaufenden Mittelebene des Trägerkörpers. Der verjüngende Bereich ist mit einer profilierten Oberfläche in Form eines Zahnprofiles versehen. Die einzelnen Flanken 32, 33 des Zahnprofiles sind derartig angeordnet, dass sie sich, Mitnahmeflächen in Umfangsrichtung bildend, im wesentlichen rechtwinklig zur Umfangsrichtung erstrecken.

## Patentansprüche

1. Scheibenförmiges Werkzeug (8, 18, 28) für handgeführte Antriebsgeräte, mit einem ringscheibenförmigen Trägerkörper, der am äusseren Umfang (8e, 18e, 29) sowie wenigstens teilweise in dem an den Umfang (8e, 18e) anschliessenden Bereich der Seitenflächen (8a, 8b, 18a, 18b, 30) mit Schleifkorn belegt ist und eine zentrale Durchgangsbohrung aufweist, **dadurch gekennzeichnet**, dass sich die Durchgangsbohrung (31) beidseitig von den Seitenflächen (8a, 8b, 18a, 18b, 30) bis zu der senkrecht zur Achse der Durchgangsbohrung (31) stehenden Mittelebene des Trägerkörpers symmetrisch verjüngt.

2. Werkzeug nach Anspruch 1, dadurch gekennzeichnet, dass sich die Durchgangsbohrung (31) kegelförmig verjüngt.

3. Werkzeug nach Anspruch 1 oder 2, dadurch gekennzeichnet, dass die Durchgangsbohrung (31) im sich verjüngenden Bereich eine profilierte Oberfläche aufweist.

4. Verwendung eines scheibenförmigen Werkzeugs (8, 18) nach einem der Ansprüche 1 bis 3, in Verbindung mit einem handgeführten Antriebsgerät, derart, dass ein dem Antriebsgerät zugeordnetes Befestigungselement (11, 21) mit einem kegelförmigen Spannbereich in einer eine Seitenfläche (8b, 18b, 30) des scheibenförmigen Werkzeuges (8, 18, 28) nicht überragenden Weise mit der Durchgangsbohrung (31) zusammenwirkt.

## Claims

1. Discshaped tool (8, 18, 28) for hand guided drive apparatuses, comprising a discshaped carrier body which is at the outer periphery (8e, 18e, 29) and at least partially in the area of the side surfaces (8a, 8b, 18a, 18b, 30) adjacent to the periphery (8a, 18e) coated with abrasive grain and comprises a central throughbore, **characterised in that** the throughbore (31) narrows symmetrically on both sides of the side surfaces (8a, 8b, 18a, 18b, 30) up to the middle plane of the carrier body, which extends up to the throughbore (31) which extends perpendicularly to the axis.

2. Tool according to Claim 1, **characterised in that** the throughbore (31) narrows conically.

3. Tool according to Claim 1 or 2, **characterised in that** the throughbore (31) has a profiled surface in the narrowing area.

4. Use of a discshaped tool (8, 18) according to one of Claims 1 to 3 in conjunction with a hand guided drive apparatus in such a manner that a mounting element (11, 21) which is associated with the drive apparatus with a conical clamping area co-operates with the throughbore (31) in such a manner that it does not protrude over a side surface (8b, 18b, 30) of the discshaped tool (8, 18, 28).

## Revendications

1. Outil en forme de disque pour meuleuse d'angle (8, 18, 28) pour appareils d'entraînement à guidage manuel, comprenant un corps porteur en forme de disque annulaire qui est garni de grains abrasifs sur sa périphérie extérieure (8e, 18e, 29) ainsi qu'au moins partiellement dans la zone des surfaces latérales (8a, 8b, 18a, 18b, 30) située dans le prolongement de la périphérie (8e, 18e) et qui comporte un trou central débouchant, caractérisé en ce que le trou débouchant (31) présente un rétrécissement symétrique de part et d'autre des surfaces latérales (8a, 8b, 18a, 18b, 30) jusqu'au plan médian du corps porteur perpendiculaire à l'axe du trou débouchant (31).

2. Outil selon la revendication 1, caractérisé en ce que le trou débouchant (31) se rétrécit sous forme conique.

3. Outil selon la revendication 1 ou 2, caractérisé en ce que, dans la zone rétrécie, le trou débouchant (31) comporte une surface profilée.

4. Utilisation d'un outil en forme de disque (8, 18) selon l'une des revendications 1 à 3 en association avec un appareil d'entraînement à guidage manuel, de façon qu'un élément de fixation (11, 21) associé à l'appareil d'entraînement et pourvu d'une zone de serrage conique coopère avec le trou débouchant (31) sans dépasser d'une surface latérale (8b, 18b, 30) de l'outil en forme de disque (8, 18, 28).
